# EUROPEAN PATENT APPLICATION

(11) **EP 2 320 493 A1**
(43) Date of publication of application: **11.05.2011**
(21) Application number: 10014387.4
(22) Date of filing: 08.11.2010
(51) Int. Cl.: H01M 2/12

(54) **Vehicle power supply device and method for producing vehicle power supply device**

(30) Priority: 09.11.2009 JP 2009256551
(71) Applicant: Sanyo Electric Co., Ltd., Osaka 570-8677 (JP)
(72) Inventor: Okada, Wataru, Moriguchi-shi Osaka 570-8677 (JP); Nakamura, Shinsuke, Moriguchi-shi Osaka 570-8677 (JP); Ohmura, Tomoyuki, Moriguchi-shi Osaka 570-8677 (JP)
(74) Representative: Hertz, Oliver

(57) **Abstract**

A power supply device includes a battery block 2, a hollow exhaust duct 20 and an exterior case 30. The battery block 2 includes rectangular battery cells 1A that are arranged side by side and have gas relief ports 12 of gas relief valves 11. The gas relief ports 12 are aligned in substantially the same plane. The exhaust duct 20 extends along the gas relief ports 12, and exhausts gas relieved from the gas relief ports 12. The exterior case 30 accommodates the battery block 2 with the exhaust duct 2 arranged on the battery block 2. The exhaust duct 20 includes interlocking portions 40 that are arranged on different positions from a pair of guide portions 26, and protrude downward. The battery block 2 includes interlock reception portions 45 that interlock with the interlocking portions 40 and are arranged at positions corresponding to the interlocking portions 40.

## Description

### BACKGROUND OF THE INVENTION

### 1. Field of the Invention

The present invention mainly relates to a vehicle power supply device and a method for producing a vehicle power supply device that supply electric power to an electric motor for driving a car such as hybrid car and electric vehicle, and in particular to a vehicle power supply device and a method for producing a vehicle power supply device that exhaust gas relieved from gas relief valves of battery cells through an exhaust duct to the outside.

### 2. Description of the Related Art

A battery system is known that includes a number of battery cells connected to each other to supply high output voltage. Accordingly, this type of battery system is used for applications such as a power supply device in hybrid cars to be charged/discharged at a large amount of current. This type of battery system is discharged with a very large amount of current when the vehicle is accelerating, and it is charged with a considerably large amount of current during regenerative braking or the like. In this type of battery system, a gas relief valve is provided in the battery cell to prevent damage and ensure safety in an abnormal state when the internal pressure rises when the battery system is over-charged/over-discharged. The gas relief valve is opened to relieve gas when the battery internal pressure abnormally rises. It is important for battery systems that include a number of battery cells to quickly exhaust gas relieved from battery cells to the outside.

In particular, for a rectangular battery cell such as lithium ion battery that employs a nonaqueous electrolysis solution, it is important to quickly exhaust relieved gas. To achieve this quick exhaust, a battery system has been developed that includes an exhaust tube connected to relief ports of gas relief valves of battery cells (Japanese Laid-Open Patent Publication No. 2007-157633).

In the battery system disclosed in JP 2007-157633 A, the exhaust tube is connected to the gas relief ports of the rectangular batteries. In this battery system, relieved gas from the rectangular batteries is exhausted through the exhaust tube to the outside. In this battery system, a battery block is composed of a number of rectangular battery cells arranged side by side, and end plates. The rectangular battery cells are interposed between the end plate. Thus, the end plates compose the end surfaces of the battery block. The exhaust tube is located on the upper surface of the battery block. The gas relief ports of the rectangular battery cells are connected to the exhaust tube. The both ends of the exhaust tube are attached to the battery block end plates and arranged in a predetermined position in the battery block.

In the thus-constructed battery system, it is necessary to connect the exhaust tube to the gas relief ports of the rectangular battery cells without leakage of gas. If the battery internal pressure of a rectangular battery cell abnormally rises, the gas relief valve is open so that high temperature and high pressure gas will issue in jet from the gas relief port. When high temperature and high pressure gas issues in jet from the gas relief port, it is necessary to reliably guide and exhaust the gas external of a vehicle. To achieve this, in tube arrangement, it is important to position an exhaust duct.

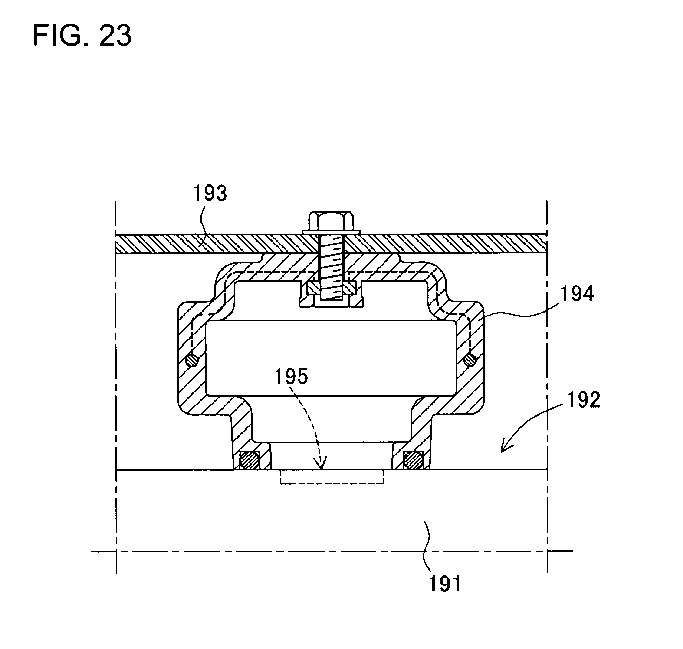

In attachment construction of exhaust duct, it is conceivable that, as shown in a cross-sectional view of Fig. 23, an exhaust duct 194 is arranged between a battery block 192 and an upper case of an exterior case 193, and the exhaust duct 194 is attached to the exterior case 193. ln this case, a packing member is sandwiched between the exhaust duct and the gas exhaust 195 of a battery cell to airtightly connect the exhaust duct and the gas exhaust 195 to each other.

When the exterior case is assembled, an upper case is coupled to a lower case. In the case where the exhaust duct 195 is previously attached to the upper case, when the upper case is coupled to the lower case, it is necessary to provide a sufficient deformation amount of the packing member. The reason is to ensure airtight connection between the exhaust duct 195 and the gas exhaust 95. lf the protruding amount of the packing member is large, since the deformation amount of the packing member is correspondingly large, the restitution force will be also large. Correspondingly, a large push force is required against this restitution force. This causes hard assembling of the upper case. Also, the packing member is arranged inside the upper case. Accordingly, even if the packing member is deviated from a predetermined position or is unintentionally caught by some components, such deviation or unintentional catch cannot be seen from the outside. As discussed above, the aforementioned attachment construction has a problem in that the exhaust duct and the gas relief port 95 cannot be easily reliably airtghtly connected to each other.

The present invention is aimed at solving the above problem, and its main object is to provide a vehicle power supply device that includes an exhaust duct and a gas relief port capable of being reliably airtghtly connected to each other, and a method for producing a vehicle power supply device.

### SUMMARY OF THE INVENTION

To achieve the above object, a power supply device according to a first aspect of the present invention includes a battery block 2, a hollow exhaust duct 20, and an exterior case 30. The battery block 2 includes a plurality of rectangular battery cells 1A that are arranged side by side. Each of the plurality of rectangular battery cells 1A has a gas relief port 12 of a gas relief valve 11. The gas relief ports 12 of the rectangular battery cells 1A are aligned in substantially the same plane. The hollow exhaust duct 20 are arranged extending along the gas relief ports 12 of the rectangular battery cells in the battery block 2, and exhausts gas relieved from the gas relief ports 12 to the outside. The exterior case 30 accommodates the battery block 2 with the exhaust duct 2 arranged on the battery block 2. The exhaust duct 20 includes interlocking portions 40 that protrude downward. The battery block 2 includes interlock reception portions 45 that interlock with the interlocking portions 40. The interlock reception portions 45 are arranged at positions corresponding to the interlocking portions 40. ln this power supply device, the exhaust duct is coupled and secured to the battery block by the interlocking portions and the interlock reception portions. As a result, since the exhaust duct can be attached to the battery block, an upper case can closes a lower case after the exhaust duct is previously airtightly attached to the battery block. Therefore, it is possible to easily airtightly seal the exhaust duct and to easily keep the airtightness of the exhaust duct.

In a power supply device according to a second aspect of the present invention, the exterior case can be composed of an upper case 32 and a lower case 31, and the battery block 2 can be secured to the lower case 31. ln this power supply device, since the exhaust duct can be attached to the battery block with the battery block being secured to the lower case before the upper case is attached to the lower case, it is possible to confirm that the exhaust duct is airtightly connected to the battery block. Therefore, it is possible to improve the reliability of the power supply device.

In a power supply device according to a third aspect of the present invention, each of the interlocking portions 40 can include an interlocking vertical leg 41, and an interlocking hook part 42. The interlocking vertical leg 41 extends downward. The interlocking hook part 42 extends from the ends of the interlocking vertical leg 41 at an acute angle. Also, each of the interlocking hook parts 42 can have a snap-in inclined surface 43, and a snap-in upper surface 44. The snap-in inclined surface 43 tapers down toward the end of the interlocking vertical leg 41. The snap-in upper surface 44 extends outward of the side surface of the interlocking vertical leg 41, and is inclined upward relative to the horizontal plane. Also, each of the interlock reception portions 45 can include an interlock reception vertical wall 46, and an interlock reception hook part 47. The interlock reception vertical wall 46 stands upward. The interlock reception hook part 47 extends from the end of the interlock reception vertical wall 46 at an acute angle. Also, the interlock reception hook part 47 can include a snap-in reception inclined surface 48, and a snap-in lower surface 49. The snap-in reception inclined surface 48 tapers down toward the end of the interlock reception vertical wall 46. The snap-in lower surface 49 extends outward of the side surface of the interlock reception vertical wall 46, and is inclined downward relative to the horizontal plane. In addition, the interlocking portion 40 can interlock with the interlock reception portion 45 by bringing the snap-in upper surface 44 in contact with the snap-in lower surface 49. ln this power supply device, the exhaust duct can interlock with the battery block by pushing the interlocking portion toward the interlock reception portion. When interlocking with the battery block, the exhaust duct may not be detached from the battery block.

In a power supply device according to a fourth aspect of the present invention, the exhaust duct 20 can further include a pair of guide portions 26 that protrude from a side surface of the exhaust duct 20. Also, the battery block 2 can include a protruding portion 27 that protrude upward to be sandwiched and held between the pair of guide portions 26. Also, the exhaust duct 20 can further include a connection protruding portion 29 that protrudes from the lower part of the exhaust duct 20. Also, the battery block 2 can include a connection recessed portion 18B that receives the connection protruding portion 29. ln addition, the protrusion direction of the pair of guide portions 26 can be substantially orthogonal to the interior wall of the connection recessed portion 18B. ln this power supply device, since the protrusion direction of the pair of guide portions is substantially orthogonal to the interior wall of the connection recessed portion, the exhaust duct can be secured to the battery block with the exhaust duct being positioned in the front-and-rear, and right-and-left directions of the battery block.

In a power supply device according to a fifth aspect of the present invention, the pair of guide portions 26, and the interlocking portion 40 can be arranged on different side surfaces of the exhaust duct 20. ln this power supply device, the guide portion and the interlocking portion can stably serve to position and secure the exhaust duct, respectively.

In a power supply device according to a sixth aspect of the present invention, the battery block 2 can further include electrically-insulating separators 15 that are interposed between the rectangular battery cells 1A. Also, the rectangular battery cells 1A and the separators 15 can be alternately arranged side by side in the battery block 2. ln addition, the protruding portion 27 can be formed in the separator 15. ln this power supply device, the protruding portion for receiving the exhaust duct can be formed integrally with the electrically-insulating separator. Therefore, this power supply device can have an advantage when the thermally-insulating separator with the protruding portion is molded.

In a power supply device according to a seventh aspect of the present invention, an electrically-insulating connection plate can be arranged between a plurality of the battery blocks 2. ln addition, the connection recessed portion 18B can be formed in the connection plate. In this power supply device, the exhaust dust connection structure can be formed integrally with the electrically-insulating connection plate. Therefore, this power supply device can have an advantage when the electrically-insulating connection plate with the exhaust dust connection structure is molded.

In a power supply device according to an eighth aspect of the present invention, the connection protruding portion can be formed in a rod shape. In addition, the connection recessed portion 18B can be formed in a hole shape capable of receiving the rod-shaped connection protruding portion. The exhaust duct can be positioned relative to the battery block by inserting the rod-shaped connection protruding portion into the hole-shaped connection recessed portion.

In a method for producing a power supply device according to a ninth aspect of the present invention includes the steps of assembling a battery block 2, placing the battery block 2, airtightly connecting a hollow exhaust duct 20, and closing the opening of the lower case 31. ln the step of assembling a battery block 2, a plurality of rectangular battery cells 1A is arranged side by side with electrically-insulating separators 15 being interposed between the rectangular battery cells 1A. The rectangular battery cells 1A have gas relief ports 12 that can relieve internal gas through gas relief valves 11 and are aligned in substantially the same plane. In the step of placing the battery block 2, the battery block 2 is placed in a lower case 31 that opens upward. In the step of airtightly connecting a hollow exhaust duct 20, the hollow exhaust duct 20 can exhaust gas relieved from the gas relief port 12 to the battery block 2. ln the step of closing the opening of the lower case 31, the opening of the lower case 31 is closed by an upper case 32. ln addition, the step of the airtightly connecting a hollow exhaust duct 20 includes sandwiching a protruding portion 27 between a pair of guide portions 26, and inserting a connection protruding portion 29 into a connection recessed portion 18B. ln the step of sandwiching a protruding portion 27 between a pair of guide portions 26, the protruding portion 27 protrudes upward form the separator 15, and the pair of guide portions 26 are arranged on a side surface of the exhaust duct 20. ln the step of inserting a connection protruding portion 29 into a connection recessed portion 18B, the connection protruding portion 29 protrudes from the lower part of the exhaust duct 20, and the connection recessed portion 18B is formed in the battery block 2 and extends in a direction substantially orthogonal to the protrusion direction of the pair of guide portions 26. ln this method, since it is not necessary to previously secure the exhaust duct to the upper case, the exhaust duct can be surely airtightly attached to the battery block before the upper case closes the lower case.

The above and further objects of the present invention as well as the features thereof will become more apparent from the following detailed description to be made in conjunction with the accompanying drawings.

### BRIEF DESCRIPTION OF THE DRAWINGS

Fig. 1 is a perspective view of a power supply device according to an embodiment of the present invention;
Fig. 2 is a cross-sectional view showing the power supply device taken along a line ll-ll shown in Fig. 1;
Fig. 3 is a perspective view of the power supply device with an upper case being removed from the power supply device shown in Fig. 1;
Fig. 4 is a perspective view of the power supply device with a case being removed from the power supply device shown in Fig. 1;
Fig. 5 is an exploded perspective view of the power supply device with an exhaust duct being removed from the power supply device shown in Fig. 4;
Fig. 6 is an exploded perspective view of the power supply device shown in Fig. 5;
Fig. 7 is a side view of the power supply device shown in Fig. 4;
Fig. 8 is an enlarged vertical cross-sectional view of a main part of the power supply device shown in Fig. 1 corresponding to a cross-sectional view taken along a line Vlll-Vlll shown in Fig. 1;
Fig. 9 is a perspective view of the exhaust duct shown in Fig. 4;
Fig. 10 is a perspective view of the exhaust duct shown in Fig. 9 with a part of the exhaust duct being enlarged;
Fig. 11 is an enlarged transverse cross-sectional view of the exhaust duct;
Fig. 12 is an enlarged perspective view of an attachment structure between the exhaust duct and a battery block;
Fig. 13 is an exploded perspective view showing the exhaust duct and the battery block shown in Fig. 12;
Fig. 14 is a cross-sectional view showing an attachment structure composed of an interlocking portion and an interlock reception portion;
Fig. 15 is an enlarged perspective view of a connection structure between the exhaust duct and the battery block;
Fig. 16 is an exploded perspective view of the connection structure between the exhaust duct and the battery block shown in Fig. 15;
Fig. 17 is an enlarged perspective view of a connection structure between the exhaust duct and the battery block;
Fig. 18 is an exploded perspective view of the connection structure between the exhaust duct and the battery block shown in Fig. 17;
Fig. 19 is an enlarged perspective view of a connection structure between the exhaust duct and the battery block according to a modified embodiment;
Fig. 20 is an exploded perspective view showing the exhaust duct and the battery block shown in Fig. 19;
Fig. 21 is a block diagram showing an exemplary hybrid car that is driven by an engine and an electric motor, and includes the power supply device;
Fig. 22 is a block diagram showing an exemplary electric vehicle that is driven only by an electric motor, and includes the power supply device; and
Fig. 23 is a cross-sectional view showing an exemplary conceivable attachment structure of an exhaust duct.

### DETAILED DESCRIPTION OF THE EMBODIMENT(S)

The following description will describe embodiments according to the present invention with reference to the drawings. It should be appreciated, however, that the embodiments described below are illustrations of a vehicle power supply device, a method for producing a vehicle power supply device and a method for controlling charging/discharging operation of a power supply device to give a concrete form to technical ideas of the invention, and a vehicle power supply device, a method for producing a vehicle power supply device and a method for controlling charging/discharging operation of a power supply device of the invention are not specifically limited to description below. Furthermore, it should be appreciated that the members shown in claims attached hereto are not specifically limited to members in the embodiments. Unless otherwise specified, any dimensions, materials, shapes and relative arrangements of the members described in the embodiments are given as an example and not as a limitation. Additionally, the sizes and the positional relationships of the members in each of drawings are occasionally shown larger exaggeratingly for ease of explanation. Members same as or similar to those of this invention are attached with the same designation and the same reference numerals, and their description is omitted. In addition, a plurality of structural elements of the present invention may be configured as a single part that serves the purpose of a plurality of elements, on the other hand, a single structural element may be configured as a plurality of parts that serve the purpose of a single element. Also, the description of some of examples or embodiments may be applied to other examples, embodiments or the like.

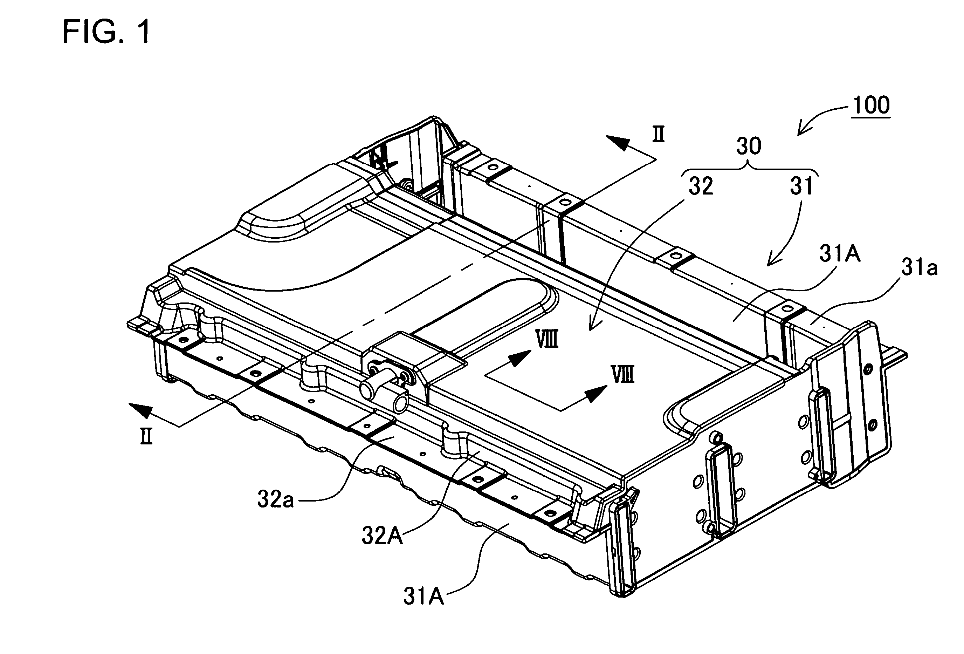

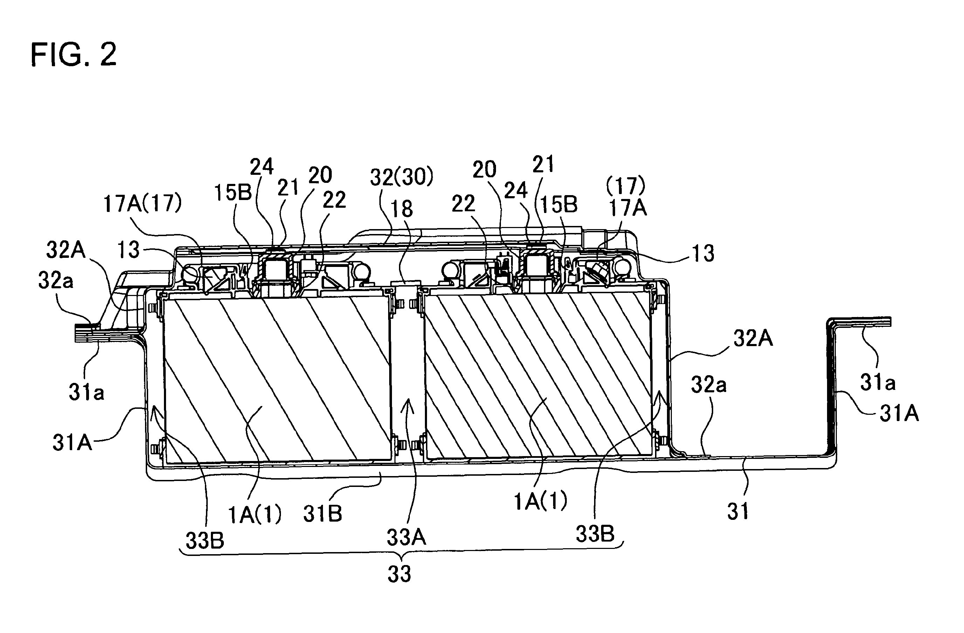

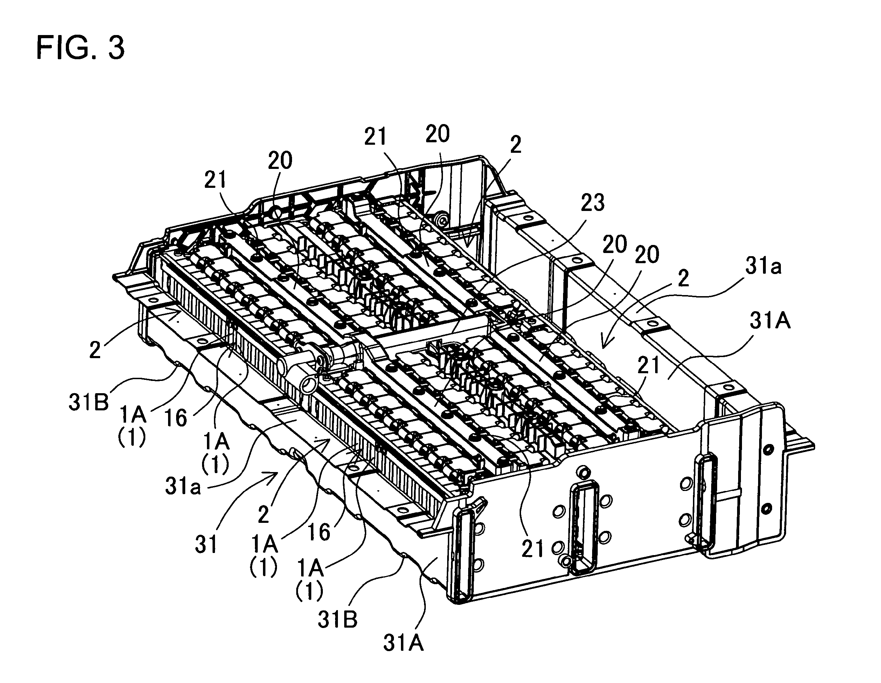

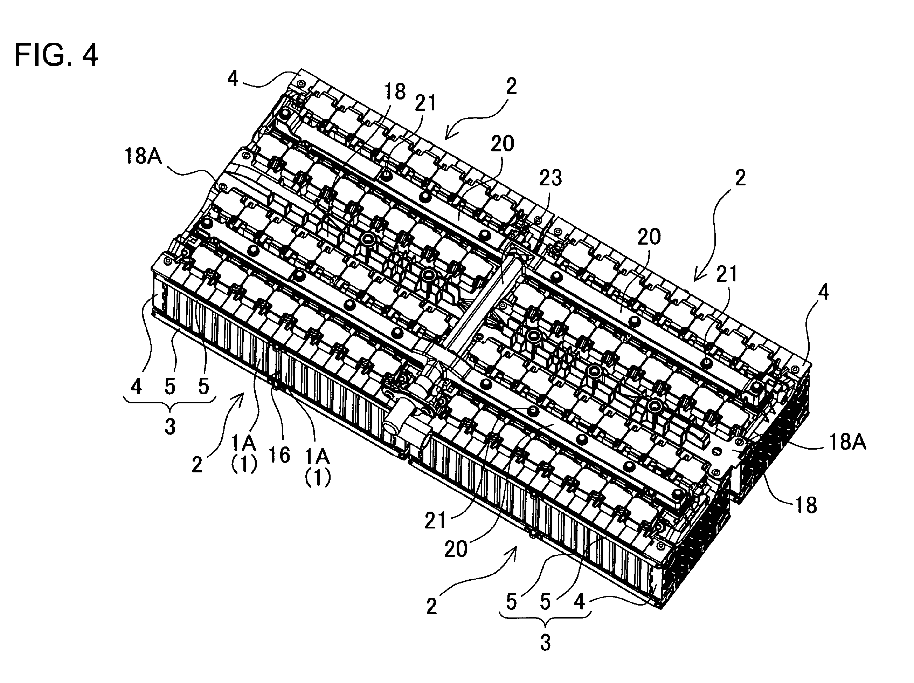

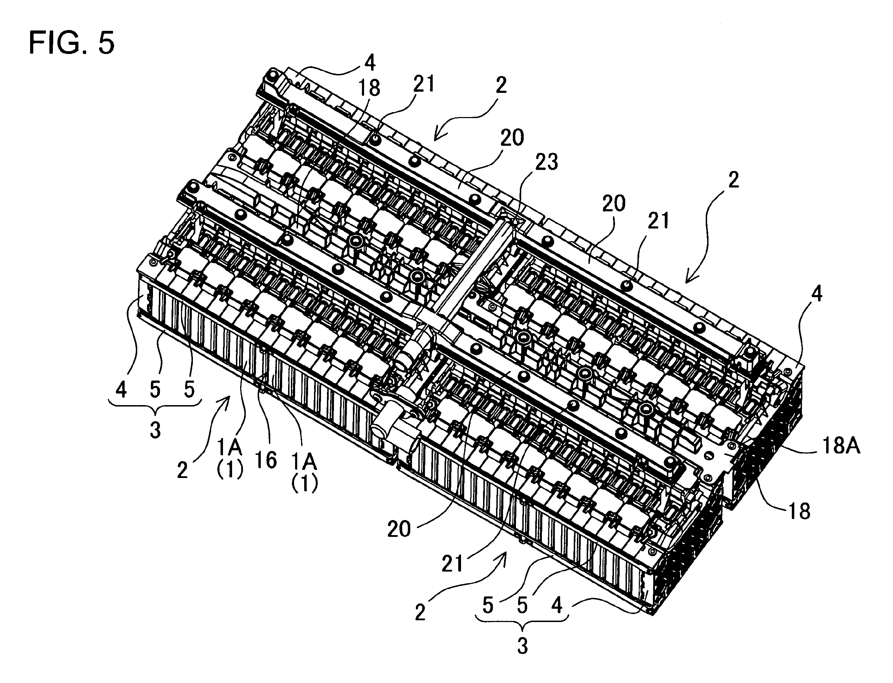

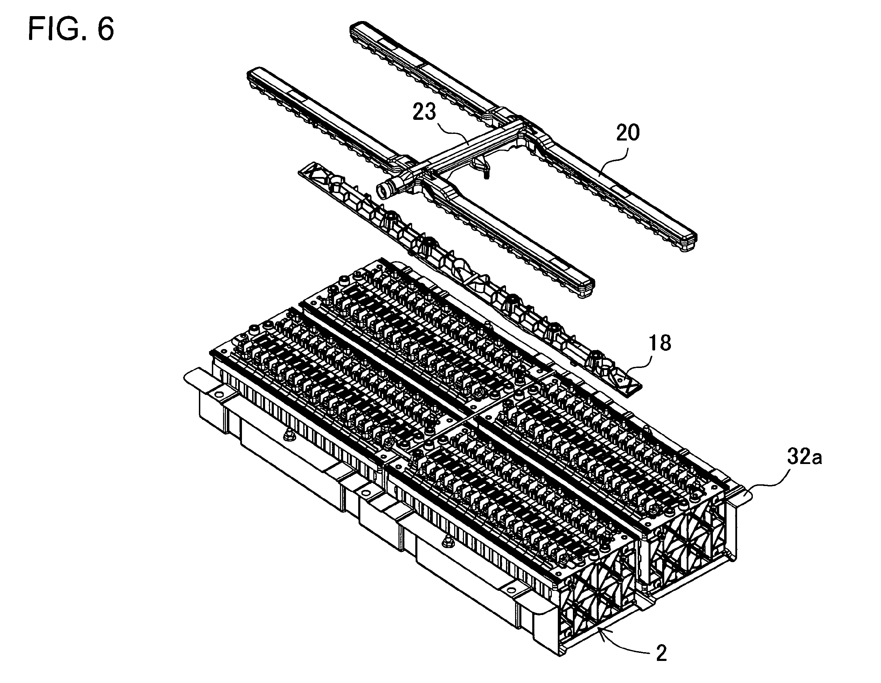

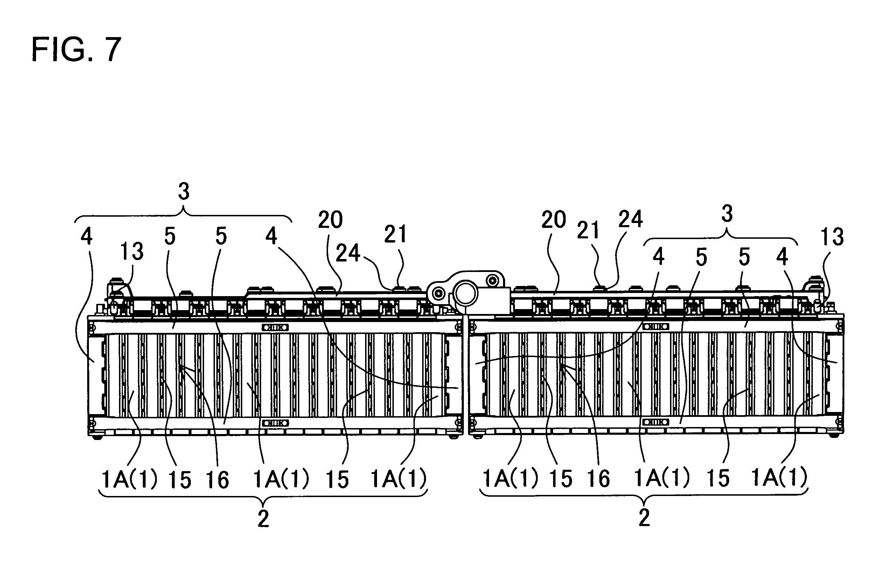

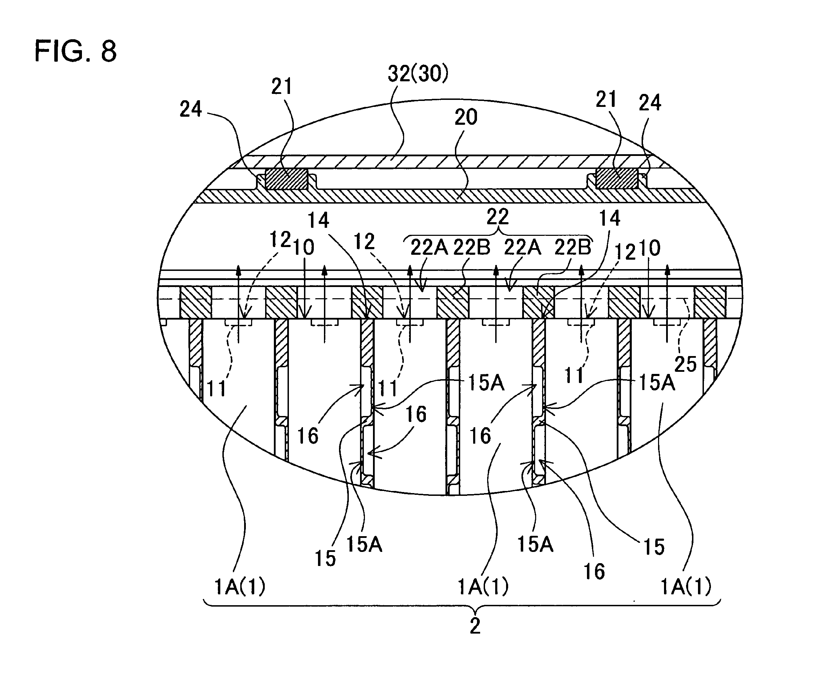

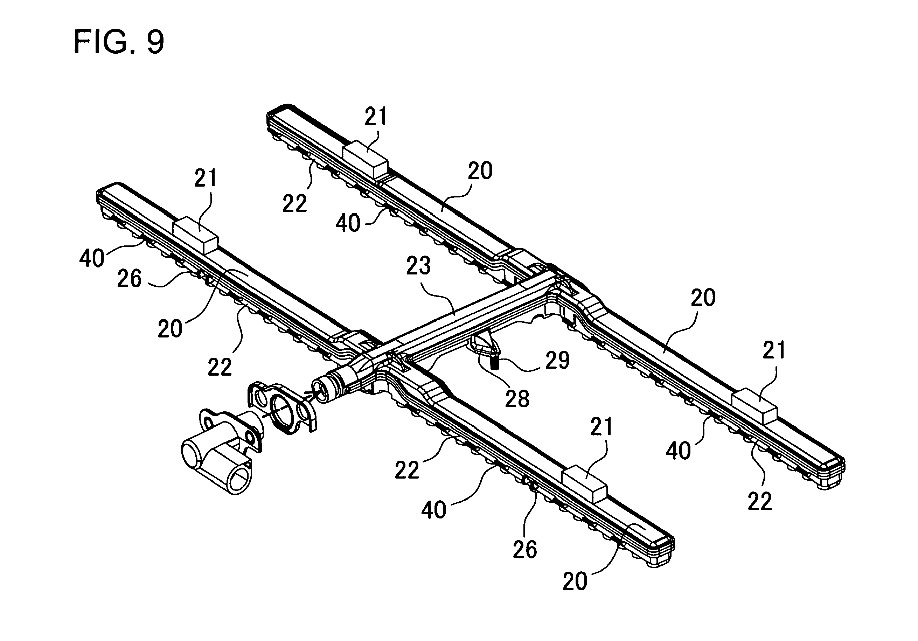

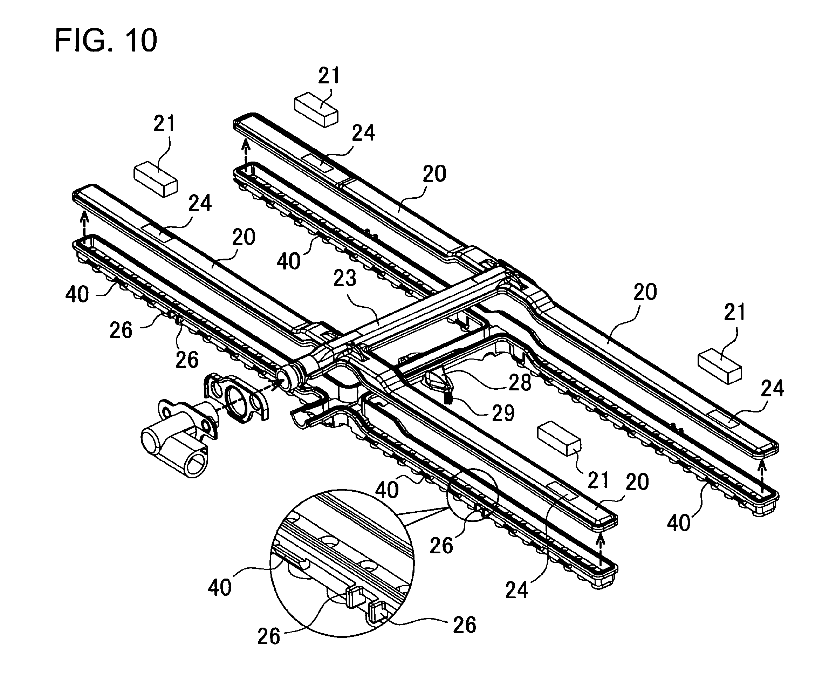

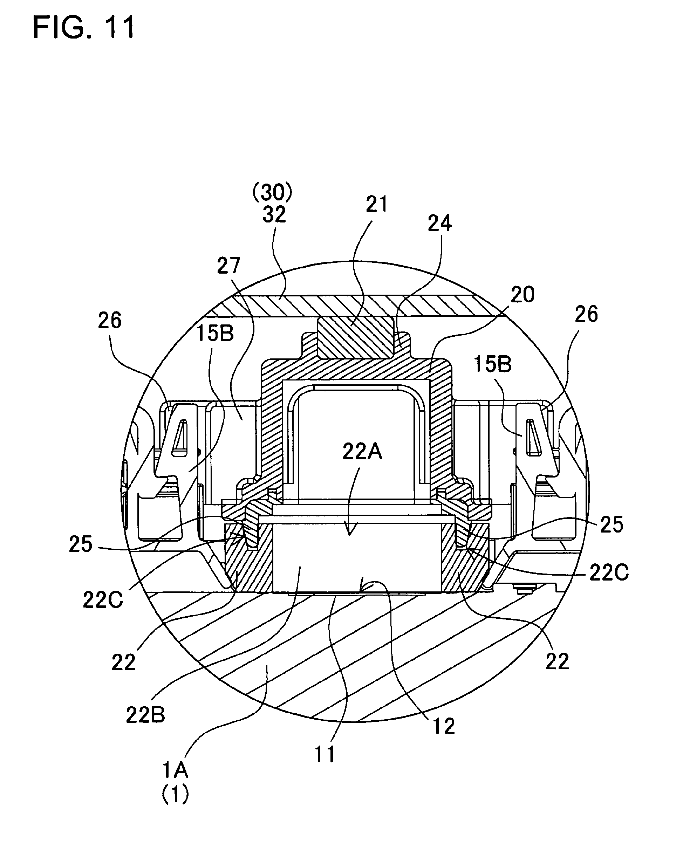

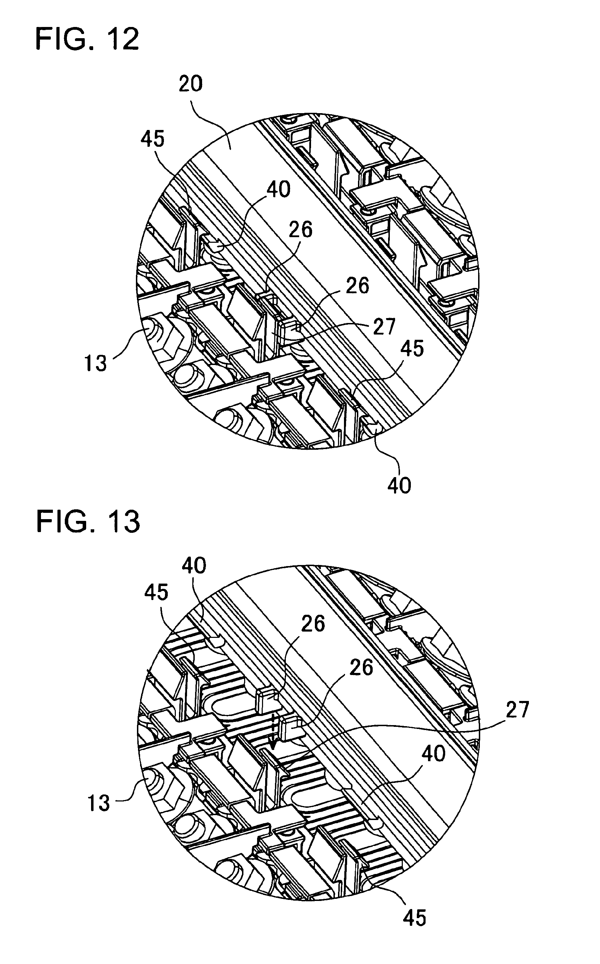

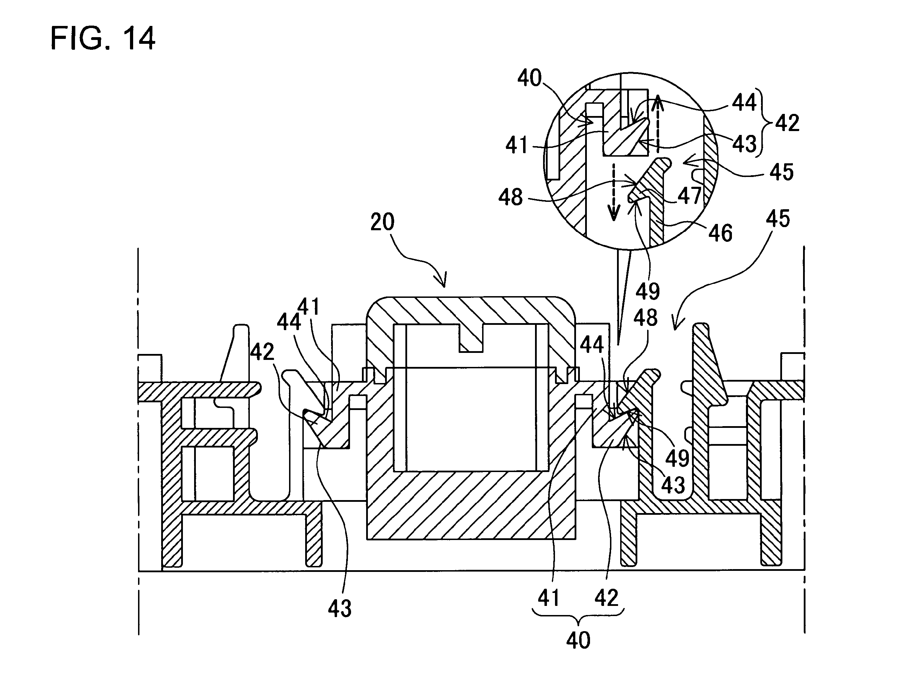

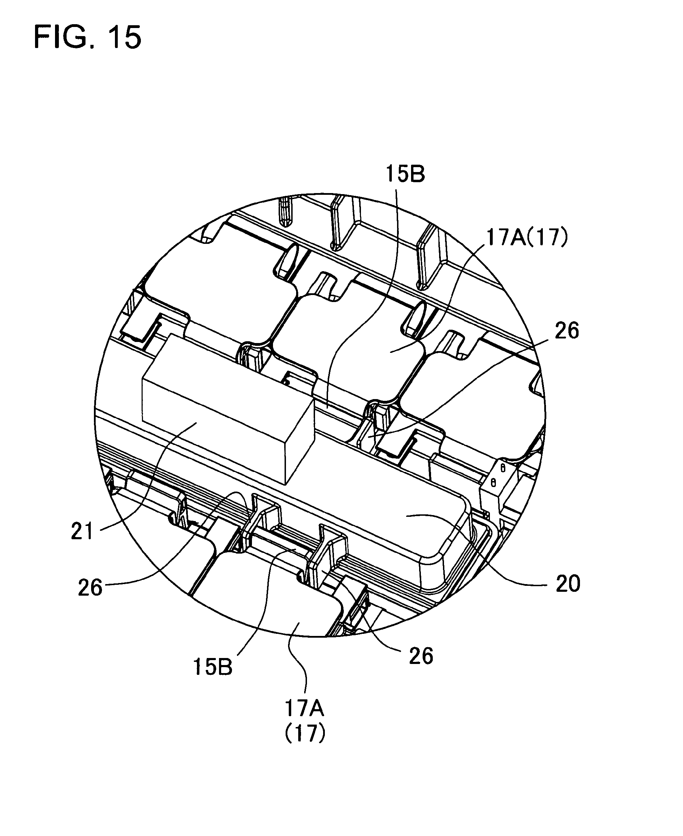

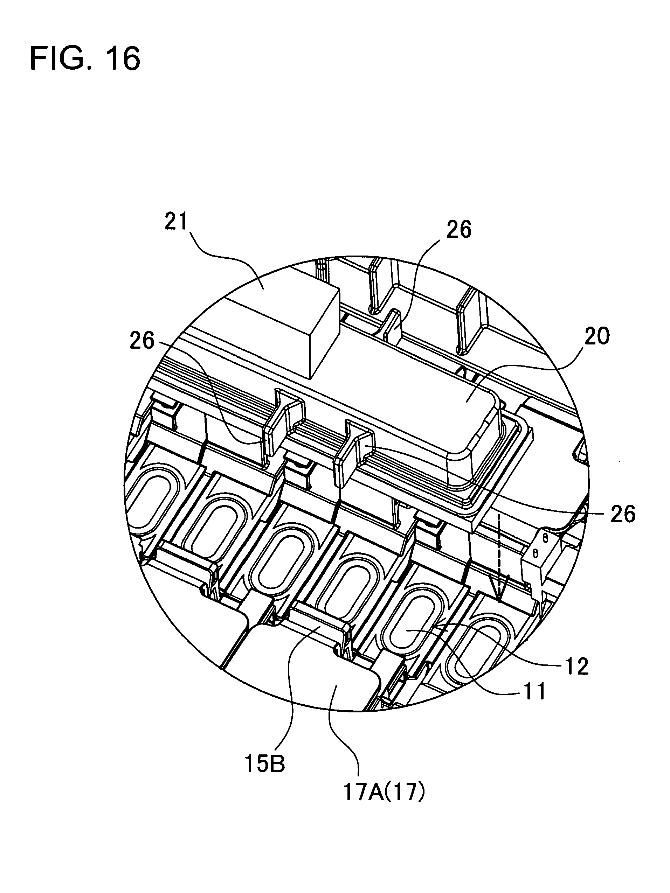

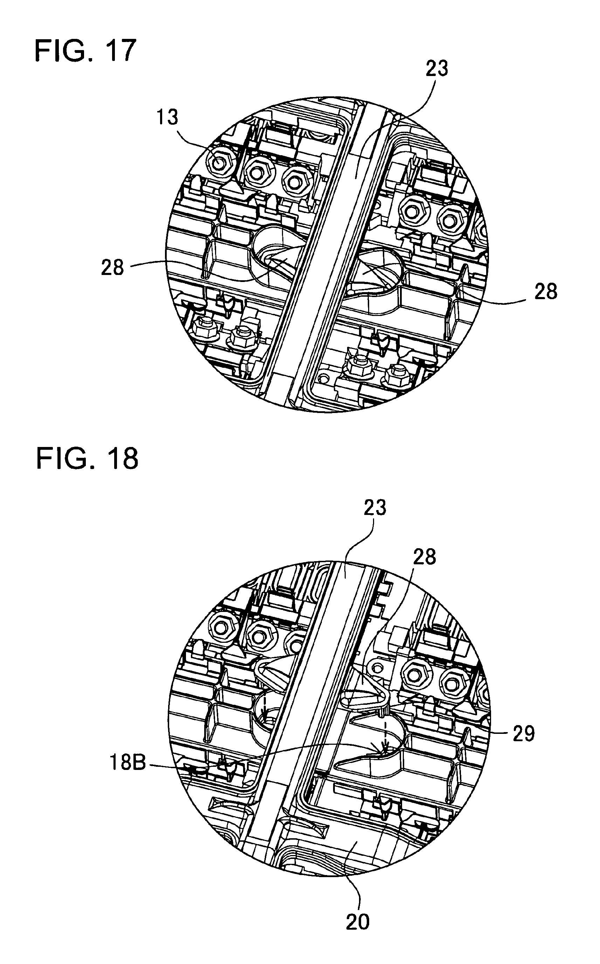

The following description will describe a power supply device according to an embodiment of the present invention with reference to Figs. 1 to 18. ln this embodiment, the present invention is applied to a vehicle power supply device. Fig. 1 is a perspective view showing a power supply device. Fig. 2 is a cross-sectional view of the power supply device taken along a line ll-ll in Fig. 1. Fig. 3 is a perspective view the power supply device shown in Fig. 1 with an upper case being removed from the power supply device. Fig. 4 is a perspective view the power supply device shown in Fig. 1 with a lower case being removed from the power supply device. Fig. 5 is an exploded perspective view of the power supply device with the exhaust duct being removed from the power supply device shown in Fig. 4. Fig. 6 is an exploded perspective view of the power supply device shown in Fig. 5. Fig. 7 is a side view of the power supply device shown in Fig. 4. Fig. 8 is an enlarged vertical cross-sectional view of a main part of the power supply device corresponding to a cross-sectional view taken along a line Vlll-Vlll shown in Fig. 1. Fig. 9 is a perspective view of the exhaust duct shown in Fig. 4. Fig. 10 is a perspective view of the exhaust duct shown in Fig. 9 with a part of the exhaust duct being enlarged. Fig. 11 is an enlarged transverse cross-sectional view of the exhaust duct. Fig. 12 is an enlarged perspective view of an attachment structure between the exhaust duct and a battery block. Fig. 13 is an exploded perspective view showing the exhaust duct and the battery block shown in Fig. 12. Fig. 14 is a cross-sectional view showing an attachment structure composed of an interlocking portion and an interlock reception portion. Fig. 12 is an enlarged perspective view of an attachment structure between the exhaust duct and a battery block. Fig. 16 is an exploded perspective view of the connection structure between the exhaust duct and the battery block shown in Fig. 15. Fig. 17 is an enlarged perspective view of a connection structure between the exhaust duct and the battery block. Fig. 18 is an exploded perspective view of the connection structure between the exhaust duct and the battery block shown in Fig. 17. The power supply device shown in these Figures is suitable mainly for power supplies of electric vehicles such as hybrid cars that are driven by both an engine and a motor, and electric vehicles that are driven only by a motor. However, the power supply device according to the present invention can be used for vehicles other than hybrid cars or electric vehicles, and can be also used for applications other than electric vehicle that require high power.

A power supply device 100 shown in Figs. 1 to 3 includes battery blocks 2, and a hollow exhaust duct 20. Each of the battery blocks 2 is composed of a plurality of battery cells 1. Each of the battery cells 1 has a gas relief valve 11. The hollow exhaust duct 20 are arranged extending along the gas relief ports 12 of the battery cells 1 in the battery blocks 2, and exhausts gas relieved from the gas relief ports 12 to the outside. As shown in Fig. 3, the battery blocks 2 are accommodated in an exterior case 30. The exhaust duct 20 is secured on the upper surfaces of the battery blocks 2.

In each of the battery block 2 shown in Figs. 4 to 7, the battery cell 1 is composed of a rectangular battery cell 1A. Each of the battery blocks 2 is composed of a plurality of the rectangular battery cells 1A arranged side by side. The battery blocks 2 are secured to the battery holder 3 on the outside of the battery blocks 2. ln the power supply device 100, a plurality of battery blocks 2, four battery blocks 2 in the case of Fig. 4 are arranged on the same plane in columns and rows. As shown in Fig. 8, the rectangular battery cells 1A are arranged side by side so as to interpose separators 15 between the rectangular battery cells 1A with outer peripheral surfaces 10 of the rectangular battery cells 1A with the gas relief ports 12 being aligned in the same plane. Thus, the battery block 2 is constructed. The hollow exhaust duct 20 is arranged extending along the gas relief ports 12 of the rectangular battery cells 1A in the battery blocks 2. Thus, the gas relief ports 12 of the rectangular battery cells 1A in the battery blocks 2 are connected by the hollow exhaust duct 20 so that gas relieved from the gas relief ports 12 can be exhausted to the outside. The rectangular battery cells 1A shown in Fig. 8 are arranged side by side with the outer peripheral surfaces 10 with the gas relief ports 12 facing upward.

As shown in Fig. 2, etc., the width of the illustrated rectangular battery cell 1A is greater than their thickness. In other words, the rectangular battery cells 1A are thin rectangular batteries the thickness of which is smaller than their width. The rectangular battery cells 1A are arranged in the thickness direction. Thus, the battery block 2 is constructed. The rectangular battery cells 1A are lithium-ion rechargeable batteries. However, the rectangular battery cells may be nickel-hydrogen batteries or nickel-cadmium batteries. The rectangular battery cells 1A shown in Figs. 5 and 7 have wide quadrangular surfaces. The rectangular battery cells 1 are arranged side by side with one of the quadrangular surfaces of one rectangular battery facing one of the quadrangular surfaces of another rectangular battery. Thus, the battery block 2 is constructed. The rectangular battery cell 1A has the gas relief port 12 of the gas relief valve 11 in the central part on the upper surface, as shown in Fig. 8, etc. Positive and negative electrode terminals 13 protrude from both end parts of the upper surface of the rectangular battery cell.

lf the internal pressure of the rectangular battery cell 1A becomes higher than a predetermined pressure, the gas relief valve 11 will open to prevent increase of the internal pressure. The gas relief valve 11 includes a valve member (not shown) that can close the gas relief port 12. The valve member can be composed of thin film that can be broken by a predetermined pressure. Alternatively, the valve member can be composed of a valve body that is biased by an elastic member to be seated on a valve seat, and can open when the internal pressure reaches a predetermined pressure. When the gas relief valve 11 opens, the inside of the rectangular battery cell 1A communicates with the outside through the gas relief port 12 to relieve the internal gas whereby preventing increase of the internal pressure.

One of the positive and negative electrode terminals 13 of a rectangular battery cell 1A is coupled to the other of the positive and negative electrode terminals 13 of an adjacent rectangular battery cell 1A so that these rectangular battery cells 1A are serially connected to each other. In the power supply device, the positive and negative electrode terminals 13 of adjacent rectangular battery cells are serially connected to each other by busbars. In the case of the power supply device in that adjacent rectangular battery cells are serially connected to each other, the output voltage of the power supply device can be high, and as a result the power supply device can provide high power. However, in the power supply device according to the present invention, adjacent rectangular battery cells may be connected in parallel to each other.

In the battery block 2, as shown in Fig. 8, the separators 15 are interposed between the rectangular battery cells 1A, which are arranged side by side. The separator 15 electrically insulates adjacent rectangular battery cells 1A from each other. Although not illustrated, the separators 15 have a shape the surfaces of which hold the rectangular battery cells 1A at predetermined positions so that the rectangular battery cells 1A are fitted to the spacers. Thus, adjacent rectangular battery cells 1A can be arranged side by side without deviation from the predetermined positions. In the case where the side-by-side arranged rectangular battery cells 1A are electrically insulated from each other by the separators 15, exterior containers of the rectangular battery cells 1A can be formed of metal such as aluminum. However, in the construction that interposes the separators 15 between the rectangular battery cells 1A, in the case where the separators 15 are formed of plastic or the like, which has small heat conductivity, there is an effect in that adjacent rectangular battery cells 1A can be effectively prevented from thermal runaway.

The separator 15 interposed between the rectangular battery cells 1A can have cooling gaps 16 that are formed between the rectangular battery cells 1A. Cooling gas such as air can flow through the cooling gaps 16 to effectively cool the rectangular battery cells 1A. The separator 15 shown in Fig. 8 has grooves 15A on its surfaces that face the rectangular battery cells 1A. The grooves 15A extend to the both edges of the separator 15. The cooling gaps 16 are thus formed between the rectangular battery cells 1A. ln the separator 15, the grooves 15A are arranged in parallel to each other at a predetermined interval. The grooves 15A are formed on the both surfaces of the separator 15. Thus, the cooling gaps 16 are formed between each of adjacent rectangular battery cells 1A and the separator 15. The thus-configured power supply device has a feature in that the rectangular battery cells 1A on the both sides of the separator 15 can be effectively cooled through the cooling gaps 16, which are formed on the both sides of the separator 15. However, the grooves may be formed only on one side of the separator so that the cooling gaps are formed between the rectangular battery cell 1A and the separator. The cooling gap 16 extends in the horizontal direction, and opens toward the left and right sides of the battery block 2. Air is forcedly blown into the cooling gaps 16, and efficiently and directly cools the exterior containers of the rectangular battery cells 1A. The thus-configured power supply device has a feature in that thermal runaway of the rectangular battery cells 1A can be effectively prevented and the rectangular battery cells 1A can be efficiently cooled.

In order to hold the side-by-side arranged rectangular battery cells 1A, which compose the battery block 2, the battery holder 3 includes a pair of end plates 4, and coupling members 5. The pair of end plates 4 are mounted to the both ends of the battery block 2. The both ends and/or the center part of the coupling member 5 are attached to the end plates 4.

The end plates 4 have a quadrangular external shape with substantially the same dimensions as the rectangular battery cell 1A. The end plates 4 hold the side-by-side arranged rectangular battery cells from the both end sides of the battery block 2. The end plates 4 are formed of plastic or metal. Reinforcing ribs are formed integrally with the outside surfaces of the end plates 4. The reinforcing ribs extend in certain directions in the outside surfaces of the end plates 4. Reinforcing metal members can be secured on the end plates to reinforce the end plates. In addition, the coupling members can be secured to the reinforcing metal members. In this construction, the reinforcing metal members can reinforce the end plates so that the end plates are strongly constructed. In addition, the reinforcing metal members can firmly receive the coupling members. In particular, in this construction, the end plate can be formed of plastic and can be sufficiently reinforced. However, the end plates are not necessarily reinforced by the reinforcing metal member. For example, the end plates can be formed of metal. In this case, the coupling members can be directly secured to the end plates without the reinforcing metal member.

The coupling members 5 are formed of metal such as steel. The both ends and/or the center part of the coupling member 5 are attached to the end plates 4 by fastening screws (not shown).

In the power supply device 100 shown in Figs. 2 through 7, the exhaust duct 20 arranged on the upper surfaces of the battery blocks 2. Figs. 9 and 10 are the perspective view and exploded perspective view of the exhaust duct 20, respectively. Fig. 11 is the enlarged cross-sectional view of the exhaust duct 20 connected to the battery block. The exhaust duct 20 is formed of electrically-insulating plastic by molding. The electrically-insulating plastic can be plastic such as nylon resin and epoxy resin. However, the exhaust duct may be formed of metal. Although not illustrated, an upper part of the exhaust duct may be formed from metal plate, while a lower part exhaust duct may be formed of plastic. Since the exhaust duct is formed of electrically-insulating plastic, even if the exhaust duct is in contact with surfaces of rectangular battery cells, a short circuit does not occur between the exterior containers of the rectangular battery cells. In the battery block 2 that includes a number of rectangular battery cells 1A arranged side by side, adjacent rectangular battery cells 1A are serially connected to each other. As a result, the output voltage of the battery block 2 can be high. In this battery block 2, the exterior containers of adjacent rectangular battery cells 1A have potential difference. For this reason, if a metal exhaust duct connects the exterior containers of rectangular battery cells 1A to each other, a short circuit will occur between the exterior containers with potential difference. In the exhaust duct with a lower part on the battery block 2 side formed of plastic as an electrically insulating material, or in the exhaust duct 20 formed of plastic as an electrically insulating material as a whole, even if the exhaust duct is in contact with exterior containers of rectangular battery cells 1A, a short circuit does not occur.

The exhaust duct 20 is arranged between the battery blocks 2 and the exterior case 30. ln this power supply device, the exhaust duct 20 is elastically biased toward the battery blocks 2 by the exterior case 30, and arranged in place. In the power supply device 100 shown in Figs. 2, 8, and 11, elastically-biasing members 21 are arranged between the exterior case 30 and the exhaust duct 20 so that the exterior case 30 elastically biases the exhaust duct 20 toward the surfaces of the battery blocks 2. ln order to arrange the elastically-biasing members 21 in predetermined positions, concave holder portions 24 are formed on the upper surface of the exhaust duct 20. As shown in Fig. 10, the concave holder portions 24 are formed in a concave shape on the upper surface of the exhaust duct 20 by molding to hold the elastically-biasing members 21 in the predetermined positions. The elastically-biasing members 21 protrude from the concave holder portions 24, and come in contact with the interior surface of the exterior case 30. The concave holder portions 24 are formed integrally with the exhaust duct 20. The elastically-biasing members 21 are arranged in a plurality of positions of the upper surface of the exhaust duct 20, in four corner parts of the entire exhaust duct 20, which can be defined by four straight exhaust duct 20 portions arranged in two columns in the case of Figs. 9 and 10. Thus, in this case, the elastically-biasing members 21 are arranged on the outside end parts of the four straight exhaust duct 20 portions. In the power supply device 100 shown Figs. 3 through 5, four battery blocks 2 are arranged in the exterior case 30, and the exhaust duct 20 portion is arranged on each of the battery blocks 2. Thus, the four straight exhaust duct 20 portions are arranged on the four battery blocks 2. Each of the exhaust duct 20 portions is provided with one concave holder portion 24. Needless to say, the elastically-biasing members 21 may be arranged in three positions or less, or in five positions or more. The number of the elastically-biasing members 21 can be adjusted depending on the length, required strength, and the like of the exhaust duct.

The elastically-biasing member 21 is composed of a rubber-type elastic member. However, the elastically-biasing member is not necessarily composed of a rubber-type elastic member, for example, can be composed of a biasing spring member. The elastically-biasing member 21 can be elastically deformed via the exterior case 30 to bias the exhaust duct 20 toward the surfaces of the battery blocks 2. ln the power supply device that elastically biases the exhaust duct 20 toward the battery blocks 2 in the exterior case 30 through the elastically-biasing members 21, since the elastically-biasing members 21 are elastically deformed, it is possible to increase the elastic deformation amount, that is, the stroke of elastic deformation. Therefore, the exhaust duct 20 can be effectively biased toward the battery blocks 2. However, the power supply device according to the present invention does not necessarily include the elastically-biasing member. The reason is that the exhaust duct 20 can be biased toward the surfaces of the battery blocks 2 by elastically deforming the exterior case 30 or the exhaust duct 20. The exterior case 30 can be formed from a metal plate, or formed of hard plastic, in particular, of fiber-reinforced plastic to be able to be elastically deformed. Also, the exhaust duct 20 can be formed from a metal plate, or formed of hard plastic to be able to be elastically deformed.

In the power supply device 100 shown in Figs. 8, 10, and 11, an elastically deformable packing member 22 is interposed between the exhaust duct 20 and the battery block 2. ln the power supply device 100 shown Figs. 3 through 5, since four battery blocks 2 are arranged in the exterior case 30, four sheets of packing members 22 are arranged on the four battery blocks 2. That is, one sheet of packing member 22 is arranged on one battery block 2. According to this construction, the packing members 22 can effectively prevent leakage of gas between the exhaust duct 20 and the rectangular battery cells 1A. However, although not illustrated, a plurality of divided packing members 22 may be arranged on one battery block 2. ln this case, the divided packing members 22 can also prevent leakage of gas between the gas relief ports 12 and the rectangular battery cells 1A.

The elastic coefficient of the packing member 22 is larger than the elastically-biasing member 21. That is, the packing member 22 is formed of a softer material than the elastically-biasing member 21. This packing member 22 is sandwiched between the battery block 2 and the exhaust duct 20, and is elastically deformed larger than the elastically-biasing member 21. ln other words, when the exterior case 30 biases the exhaust duct 20 toward the battery blocks 2, the elastic displacement, i.e., the deformation vertical displacement of the packing member 22 is larger than the elastically-biasing member 21. For example, the packing member 22 is deformed at a compression ratio of 20% to 70%, when sandwiched between the exhaust duct 20 and the battery block 2. Accordingly, it is possible to reliably close a gap between the exhaust duct 20 and the rectangular battery cell 1A. The compression ratio refers to the ratio of the deformation vertical displacement to the original thickness of the packing member 22. For example, in the case where the packing member 22 with original thickness of 10 mm is deformed to thickness of 5 mm, the compression ratio is 50%. The soft elastically deformable packing member 22 can be formed of closed-cell soft plastic foam. Closed cells can make the plastic foam packing member 22 soft. Accordingly, the elastic deformable displacement of the packing member 22 can be large. In addition, the closed-cell structure can prevent permeation of gas. However, the packing member is not necessarily formed of closed-cell plastic foam. Any rubber-types of elastic members can be used deformable larger than the elastically-biasing member.

A fit-in groove 22C is formed on a surface of the packing member 22 that faces the exhaust duct 20, on the upper surface of the packing member 22 in the case of Figs. 10 and 11. The exhaust duct 20 can be fitted into the fit-in groove 22C. The fit-in groove 22C is formed along the outer peripheral rim of the packing member 22 shown in Fig. 10. As shown in Fig. 11, the exhaust duct 20 is provided with a protruding rim part 25 to be guided into, that is, inserted into the fit-in groove 22C. When the protruding rim part 25 is inserted into the fit-in groove 22C, the packing member 22 and the exhaust duct 20 are arranged in place and are coupled to each other. Accordingly, it is possible to reliably prevent leakage of gas between the exhaust duct 20 and the packing member 22. When gas is relieved from the gas relief port 12 of the rectangular battery cell 1A, the gas flows into the exhaust duct 20 through the protruding rim part 25.

Also, through holes 22A are formed in positions of the packing member 22 shown in Figs. 8 and 9 that face of the gas relief ports 12 of the rectangular battery cells 1A. Boundary closing portions 22B are arranged between the through holes 22A, and close side-by-side arrangement gaps 14 that appear at the boundaries between the rectangular battery cells 1A arranged side by side. The through holes 22A of the packing member 22 shown in Fig. 10 have an oval shape. The through hole 22A is connected to the gas relief port 12 of the rectangular battery cell 1A. The through holes 22A is located inside the fit-in groove 22C arranged along the outer peripheral rim of the packing member 22. Gas flows through the through holes 22A into the exhaust duct 20.

In the battery block 2 shown in Fig. 8, since the separator 15 is interposed between rectangular battery cells 1A, the side-by-side arrangement gaps 14 between the rectangular battery cells 1A appear on the both surfaces of the separator 15. The boundary closing portions 22B have a width larger than the side-by-side arrangement gap 14. Accordingly, the boundary closing portions 22B can close the side-by-side arrangement gaps 14 on the both surfaces of the separator 15. ln this construction, since the boundary closing portions 22B of the packing member 22 close the side-by-side arrangement gaps 14 between the rectangular battery cells 1A, the gas relieved from the gas relief ports 12 can reliably prevent flowing into the side-by-side arrangement gaps 14 between the rectangular battery cells 1A.

The protruding rim part 25 of the exhaust duct 20 is inserted into the fit-in groove 22C of the packing member 22 as shown in Fig. 11 so that the packing member 22 can be arranged in a predetermined position relative to the gas relief ports 12 and connected to the gas relief ports 12. That is, the packing member 22 is coupled to the exhaust duct 20 as a unit. In this construction, when the exhaust duct 20 is arranged in a predetermined position, the packing member 22 can be also arranged in the predetermined position.

### (Interlocking Portion 40)

This power supply device 100 has an attachment structure that secures the exhaust duct 20 to the separator 15 of the battery block 2. As shown in Figs. 12 and 13, specifically, the exhaust duct 20 includes interlocking portions 40 that protrude downward. The battery block 2 includes interlock reception portions 45 that interlock with the interlocking portions 40. The interlock reception portions 45 are arranged at positions corresponding to the interlocking portions 40. The interlocking portions 40 and the interlock reception portions 45 are formed of elastically deformable materials.

Since the battery block 2 has an attachment structure that can receive the exhaust duct 20, it is possible to provide a merit in assembling. In other words, in the construction in that the exterior case 30 is composed of the upper case 32 and the lower case 31, since the exhaust duct 20 is secured not to the upper case 32 but to the battery blocks 2 secured in the lower case 31, the upper case 32 closes the lower case 31 after the exhaust duct 20 is airtightly attached to the battery blocks 2. For this reason, since it can be confirmed that the exhaust duct airtightly attached to the battery blocks, it is possible to provide excellent reliability as compared with a system that secures the exhaust duct to the upper case.

The interlocking portions 40 are formed in the exemplary exhaust duct 20 shown in Figs. 12 and 13. Fig. 40 is the cross-sectional view showing an attachment structure composed of the interlocking portion 40 and the interlock reception portion 45. The interlocking portion 40 includes an interlocking vertical leg 41 that extends downward, and an interlocking hook part 42 that extends from the ends of the interlocking vertical leg 41 at an acute angle. The interlocking hook part 42 includes a snap-in inclined surface 43 that tapers down toward the end of the interlocking vertical leg 41, and a snap-in upper surface 44 that extends outward of the side surface of the interlocking vertical leg 41 and is inclined upward relative to the horizontal plane.

The interlock reception portion 45 arranged in the exhaust duct 20 includes an interlock reception vertical wall 46 that stands upward, and an interlock reception hook part 47 that extends from the end of the interlock reception vertical wall 46 at an acute angle. The interlock reception hook part 47 includes a snap-in reception inclined surface 48 that tapers down toward the end of the interlock reception vertical wall 46, and a snap-in lower surface 49 that extends outward of the side surface of the interlock reception vertical wall 46 and is inclined downward relative to the horizontal plane.

The ends of the interlocking hook and interlock reception hook of the interlocking portion 40 and the interlock reception portion 45 are rounded. The snap-in inclined surface 43 and the snap-in reception inclined surface 48 are arranged partially overlapping each other in the vertical direction. As a result, as shown in the enlarged view of Fig. 14, when the exhaust duct 20 is pushed toward the upper surfaces of the battery blocks 2 from the top side, the snap-in inclined surface 43 comes in contact with the snap-in reception inclined surface 48 and can be elastically deformed. When the exhaust duct 20 is further pushed, the elastic deformation will be released so that the snap-in inclined surface 43 can return toward the original orientation. Thus, the snap-in upper surface 44 comes in contact with the snap-in lower surface 49 so that the interlocking portion 40 interlocks with the interlock reception portion 45. Accordingly, the exhaust duct 20 is securely attached, and cannot move upward.

As discussed above, when the exhaust duct 20 is attached to the battery blocks 2, the exhaust duct 20 can be properly positioned to be connected to the gas relief ports of the rectangular battery cells of the battery blocks 2 without leakage of gas. To achieve this, the exhaust duct 20 has a pair of guide portions 26 that serve as positioning members that guides the exhaust duct to the predetermined position. Correspondingly, a protruding portion 27 is provided in the battery block.

### (Guide Portion 26)

Figs. 12 and 13 are with the perspective views showing an exemplary positioning structure of the guide portions 26 and the protruding portion 27. The pair of guide portions 26 protrude from a side surface of the exhaust duct 20, as shown in Figs. 9, 15 and 16. The guide portions 26 are arranged in parallel to each other and are spaced away from each other. The guide portions 26 extend in a rectangular battery cell 1A surface direction. The interval of guide portion 26 corresponds to a width that can hold the protruding portion 27 arranged in the separator 15.

### (Protruding Portion 27)

The protruding portion 27 protrudes from the upper surface of the separator 15. The side surfaces of the protruding portion 27 are interposed between the interior walls of the pair of guide portions 26. Thus, the exhaust duct 20 can be positioned in the longitudinal direction of the exhaust duct 20. As a result, the exhaust duct 20 is arranged at a predetermined position relative to the battery block 2.

### The illustrated protruding portion 27 is formed integrally with the separator 15.

In addition, the exhaust duct is positioned by connection protruding portions 29 and connection recessed portions 18B in a direction intersecting the longitudinal direction of the exhaust duct. The connection protruding portions 29 protrude from the lower part of the exhaust duct 20. The connection recessed portions 18B are formed in the battery block 2, and receive the connection protruding portions 29. ln this embodiment, the protrusion direction of the pair of guide portions 26 is substantially orthogonal to the interior wall of the connection recessed portion 18B. As a result, the exhaust duct 20 can be appropriately positioned relative to the battery block 2 in the front-and-rear, and right-and-left directions.

### (Coupling Plate 18)

The power supply device 100 shown in Figs. 4, 5 and 9 is constructed so that a connection duct 23 that couples the four exhaust duct 20 portions is arranged in predetermined positions of the battery block 2. In this power supply device, a coupling plate 18 is secured between two columns of battery blocks 2. The coupling plate 18 has the connection recessed portions 18B that position the connection duct 23 in a predetermined position, as shown in Figs. 17 and 18. The connection protruding portions 29 to be inserted into the coupling plate 18 protrude from the lower surface of the connection duct 23. The connection duct 23 shown in Fig. 18 includes connection arms 28 that protrude from the both sides of the connection duct 23 and are provided with the connection protruding portions 29. The connection protruding portion 29 protrudes from the lower surface of the connection arm 28. When the connection protruding portions 29 arranged on the connection arms 28 are inserted into the connection recessed portions 18B, the connection duct 23 can be held in the predetermined position of the coupling plate 18. The coupling plate 18 is secured between the two columns of battery blocks 2, and is arranged in the predetermined position relative to the battery blocks 2. Thus, in this power supply device, the exhaust duct 20 is positioned in the predetermined position relative to the battery blocks 2 by placing the connection duct 23 in the predetermined position of the coupling plate 18.

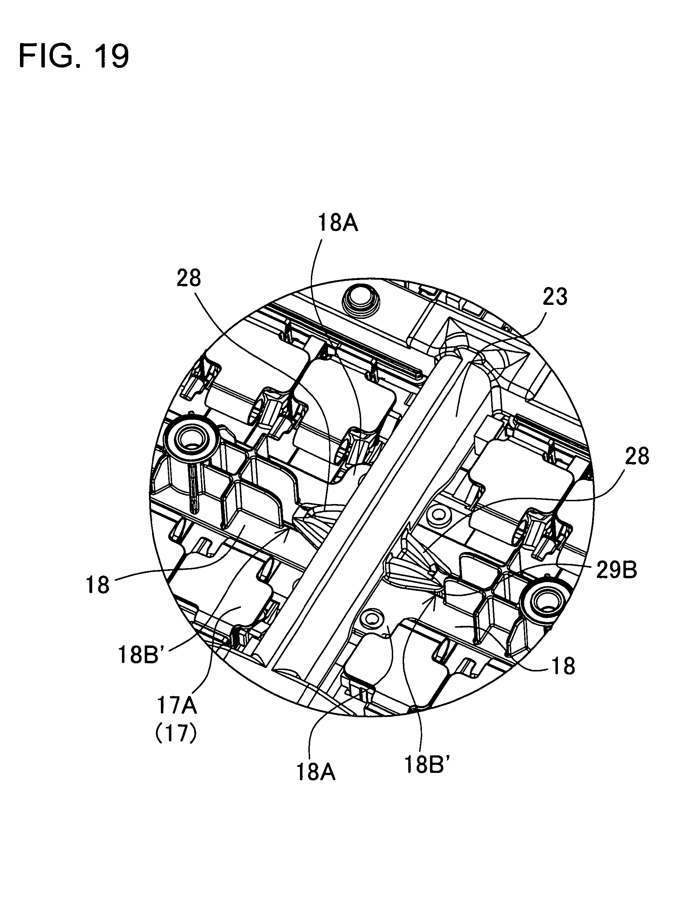

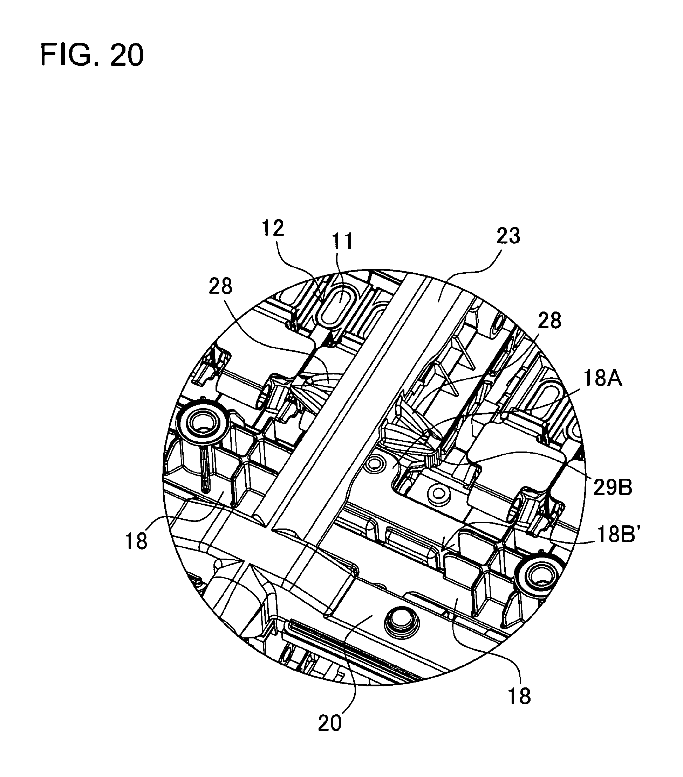

Although the exemplary connection recessed portion 18B is formed in a hole shape, the connection recessed portion 18B can be formed in a slit shape. Correspondingly, the connection protruding portion 29 can be formed in a plate shape, although the exemplary connection protruding portion 29 is formed in a rod shape. For example, in a modified embodiment shown in Figs. 19 and 20, although the connection protruding portion 29B is also formed in a rod shape, a connection recessed portion 18B' is formed in a slit shape instead of a hole shape. In the case of the slit-shaped connection recessed portion 18B', it is preferable that opposed wall surfaces that define the slit shape be orthogonal to the protrusion direction of the pair of guide portions 26. The reason is that the exhaust duct 20 can be positioned in the front-and-rear, and right-and-left directions.

In the embodiment shown in Figs. 12 and 13, the guide portions 26 and the interlock reception portions 45 are arranged in different positions in the exhaust duct 20. Since separate members serve as the attachment structure and the positioning structure, the functions by both the structures can be surely achieved.

On the other hand, in the embodiment shown in Figs. 12 and 13, one member serves as both the protruding portion 27 and the interlock reception portion 45 of the separator 15. That is, a plurality of protruding portions 27 are provided that include hook-shaped interlocking hooks on the ends of the protruding portions 27. Accordingly, some of the plurality of protruding portions 27 can serve as the interlock reception portion 45. Thus, the separator 15 can be commonly constructed. Therefore, it is possible to provide an advantage in terms of production.

In the foregoing embodiment, the attachment structure and the positioning structure are arranged on the both sides of each exhaust duct portion. However, the attachment structure or the positioning structure may be arranged on only one side of each exhaust duct portion. For example, the pair of guide portions, and the interlocking portion may be arranged on different sides of each exhaust duct portion. In this case, the guide portion for the positioning structure and the interlocking portion for the attachment structure can stably function in positions on the different sides. In addition, these portions are preferably spaced away from each other in order to surely achieve the attachment structure and the positioning structure. In addition, it is preferable that the attachment structures and the positioning structures be alternately arranged.

### (Cover Portion 17)

The separator 15 has cover portions 17 that cover the electrode terminals 13 of the rectangular battery cells 1A, as shown in Fig. 2, etc. Since the cover portion 17 covers the electrode terminals 13, which protrude from the surface of the rectangular battery cell 1A, the cover portion 17 also protrudes from the surface of the battery block 2. The cover portion 17 for the electrode terminals 13 shown in Figs. 2, 15 and 16 has an opening/closing cover part 17A that exposes/covers the electrode terminals 13. The guide portions 26 on the both sides of the exhaust duct 20 portion are in contact with the protruding portion 15B so that the exhaust duct 20 portion is arranged in the predetermined position with the opening/closing cover part 17A being closed. The cover portion 17 has the protruding portion 15B.

### (Exhaust Duct 20)

In the power supply device 100 shown Figs. 1 through 7, the four battery blocks 2 are arranged in two columns, and the two columns of exhaust duct 20 portions are arranged on the upper surfaces of the two columns of battery blocks 2. The center of the two columns of exhaust duct 20 portions are coupled to each other by the connection duct 23, which is arranged in the central part of the power supply device. Thus, the exhaust duct 20 portions and the connection duct 23 forms an H shape. Relieved gas flows from the exhaust duct 20 portions, and is exhausted to the outside through the connection duct 23 located in the central part of the power supply device. Accordingly, an outside duct (not shown) is connected to one end of the connection duct 23 to exhaust the gas to the outside. One end of each of the exhaust duct 20 portions opens and is connected to the connection duct 23, and the other end is closed. In the exhaust duct 20, gas relieved from the gas relief ports 12 flows into the exhaust duct 20 portions through the through holes 22A of the packing members 22, and is exhausted to the outside through the connection duct 23. Although the two columns of exhaust duct 20 portions are connected at the center of each column to the connection duct to exhaust the gas to the outside, two columns of exhaust duct 20 portions may be connected on the both ends of each column to two rows of connection ducts to exhaust the gas to the outside.

### (Exterior Case 30)

In the power supply device 100 shown in Figs. 1 through 3, the battery blocks 2 are accommodated in the exterior case 30. The illustrated exterior case 30 is composed of the lower case 31 and the upper case 32. ln the power supply device, a plurality of battery blocks 2 are secured in columns and rows inside the exterior case 30. ln the power supply device 100 shown in Fig. 3, two battery blocks 2 are arranged in straight in each column on the lower case 31. Two sets of the two battery blocks 2 are arranged in two rows. Thus, four battery blocks 2 are accommodated. The two columns of battery blocks 2 are spaced away from each other to form an air duct 33 between them

The lower case 31 and the upper case 32 are metal plates that are formed in recessed shapes. The lower case 31 and the upper case 32 are formed from metal plates with the same thickness. Alternatively, the lower case 31 is formed from a metal plate thicker than the upper case 32. The lower case 31 and the upper case 32 have side wall portions 31A and 32A, respectively. Thus, the lower case 31 and the upper case 32 are formed in recessed shapes. In the illustrated power supply device 100, the width of the lower case 31 is larger than the upper case 32. Accordingly, an electronic-component case (not shown) can be arranged between the side wall portion 32A of the upper case 32 and the side wall portion 31A of the lower case 31. The width of the lower case 31 is increased by a width corresponding to the width of the electronic-component case from the width of the upper case 32. That is, the width of the lower case 31 can be obtained by adding the width of the electronic-component case to the width of the upper case 32.

One (left side in Fig. 2) of the side wall portions 31A of the lower case 31 is securely coupled to one of the side wall portions 32A of the upper case 32. The right side wall portion 32A of the upper case 32 is secured to the bottom of the lower case 31 to partition space inside the upper case 32 into an accommodation part for the battery blocks 2 and an accommodation part for the electronic-component case. The height of the right side wall portion 32A of the upper case 32 to be secured to the bottom of the lower case 31 is larger than the left side wall portion 32A. Thus, the bottom edge of the right side wall portion 32A can be secured to the bottom of the lower case 31. The lower case 31 and the upper case 32 have bent portions 31 a and 32a, respectively, at one ends of the lower case 31 and the upper case 32 to be coupled to each other. The bent portions 31 a and 32a are secured to each other by nuts (not shown) and fastening screws (not shown) that penetrate the bent portions 31 a and 32a, or by rivets or the like that penetrate the bent portions. Thus, the lower case 31 and the upper case 32 are coupled to each other.

In the power supply device 100 shown in Fig. 2, the side wall portions 31A with substantially the same height are arranged on the both sides of the lower case 31. ln this Figure, the left side wall portion 32A of the upper case 32 is secured to the left side wall portion 31A of the lower case 31. The right side wall portion 31A of the lower case 31 is not secured to the side wall portion 32A of the upper case 32 but to a side wall portion of an attachment plate (not shown) of the electronic-component case to be secured to the upper case 32. The upper case 32 also has the side wall portions 32A on the both sides. In the Figure, the height of the right side wall portion 32A of the upper case 32 is larger than the left side wall portion 32A. The side wall portion 32A with lower height is secured to the left side wall portion 31A of the lower case 31. The right side wall portion 32A with larger height is secured to the bottom of the lower case 31.

Although not illustrated, the attachment plate of the electronic-component case is secured to the upper end of the right side wall portion 32A of the upper case 32. The attachment plate includes a top plate, and the side wall portion that is arranged on one side of the top plate. The attachment plate can be constructed by forming a metal plate into an L shape. The edge of the top plate of the attachment plate is secured to the upper edge of the side wall portion 32A of the upper case 32. A bent portion is arranged on the lower end edge of the side wall portion, and is secured to the bent portion 31 a, which is arranged in the upper end of the right side wall portion 31A of the lower case 31. The bent portion of the attachment plate is secured to the bent portion 31 a of the lower case 31 so that the attachment plate is coupled to the lower case 31. ln the thus-constructed exterior case 30, the side wall portion 32A arranged on the right side of the upper case 32 partitions space inside the upper case into the accommodation parts for the battery blocks 2 and the electronic-component case.

The exterior case 30 composed of the lower case 31 and the upper case 32 is dimensioned enough wide to form air ducts 33 outside the battery blocks 2. ln the power supply device 100 shown in Fig. 2, one air duct 33 is arranged between the two columns of battery blocks 2, and, in addition to this, other air ducts 33 are arranged between the outsides of the two columns of battery blocks 2 and the side wall portions 31A and 32A. This power supply device has a center air duct 33A that is formed between the two columns of battery blocks 2, and side air ducts 33B that are formed outside the two columns of battery blocks 2. The center air duct 33A or the side air ducts 33B serve as an inlet duct(s), while the rest of them serve as an outlet duct(s). Thus, air can flow through the cooling gaps 16 between the battery cells 1 so that the battery cell 1 can be cooled.

In the power supply device 100 shown in Fig. 2, one of the side air ducts 33B is arranged between the outside of an outside (right side in Fig. 2) column of battery blocks 2 and the side wall portion 32A of the upper case 32. Accommodation space for the electronic-component case is arranged in a part that is located outside the one of the side air ducts 33B and outside the side wall portion 32A of the upper case 32, which defines the one of the side air ducts 33B. ln this construction, the one of the side air ducts 33B and the side wall portion 32A are arranged between electronic components (not shown) accommodated in electronic-component case and the outside column of battery blocks 2. ln this construction, since heat from the battery blocks 2 does not heat electronic components, it is possible to prevent that heat generated from the battery blocks 2 adversely affects the electronic components.

The coupling plate 18 closes the upper opening of the center air duct 33A formed between the two columns of battery blocks 2, while the lower opening is closed by the lower case 31. The coupling plate 18 is a narrow metal plate that extends along center air duct 33A formed between the two columns of battery blocks 2, and is secured to the battery blocks 2 on the both sides of the coupling plate 18 to close the upper opening of the center air duct 33A. The coupling plate 18 is secured by fastening screws to the upper surfaces of the end plates 4 of the battery blocks 2 arranged on both sides of the coupling plate 18. Protruding rim parts 18A are arranged on the both sides of the both ends of the coupling plate 18. The coupling plate 18 can be secured to the battery blocks 2 by the fastening screws, which penetrate the protruding rim parts 18A.

In the aforementioned exterior case 30, the end plates 4 are secured to the lower case 31 by fastening screws (not shown) so that the battery blocks 2 are secured. The fastening screws penetrate the lower case 31, and are screwed into threaded holes (not shown) of the end plates 4 so that the battery blocks 2 are secured to the exterior case 30. The heads of the fastening screws protrude from the lower case 31. ln addition, the lower case 31 has protruding rib parts 31 B that protrude downward from the lower surface of the lower case 31 and extend along a direction orthogonal to the side-by-side arrangement direction of the battery block 2. The protruding rib parts 31 B reinforce the lower case 31, and improve the bending strength of the lower case 31. The protruding rib parts 31 B arranged on the lower surface of the lower case 31 protrude downward relative to the heads of the fastening screws, which fasten the battery blocks 2. Alternatively, the protruding rib parts 31 B have the same height as the heads. When this lower case 31 is installed on a vehicle or the like, the protruding rib parts 31 B are placed on an installation plate of the vehicle. Thus, the weight of the power supply device can be borne by a large area of the protruding rib parts 31 B and the like.

As discussed above, in the case where the battery blocks 2 are secured to the lower case 31, the battery blocks 2 can be first secured to the lower case 31, then the exhaust duct 20 can be secured to the battery blocks 2. Accordingly, before the upper case 32 is placed onto the lower case 31, it can be confirmed that the exhaust duct airtightly attached to the battery blocks.

The aforementioned power supply devices can be used as a battery system for vehicles. The power supply device can be installed on electric vehicles such as hybrid cars that are driven by both an engine and a motor, and electric vehicles that are driven only by a motor. The power supply device can be used as a power supply device for these types of vehicles.

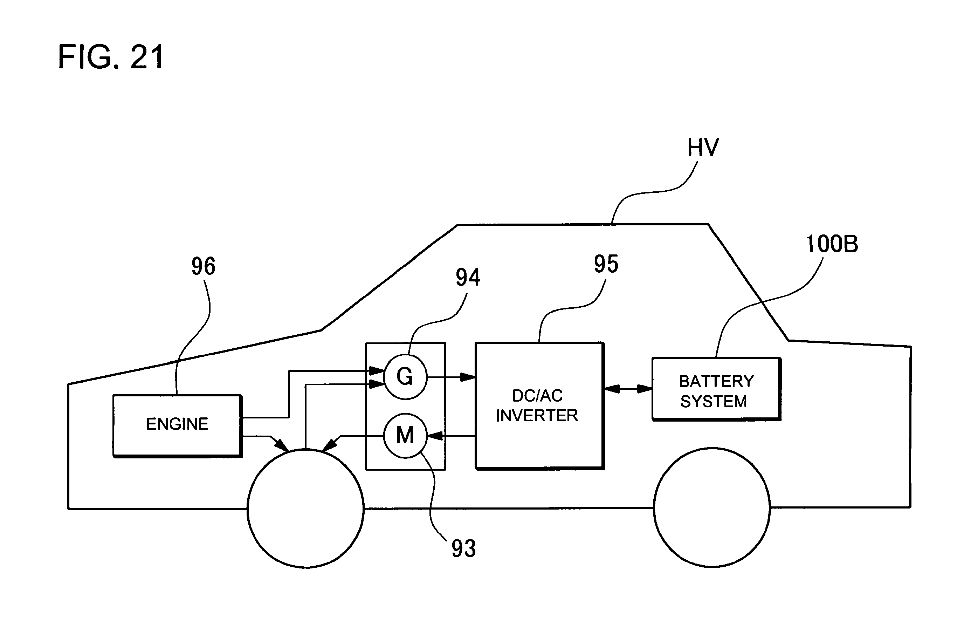

Fig. 21 is a block diagram showing an exemplary hybrid car that is driven both by an engine and an electric motor, and includes the power supply device. The illustrated vehicle HV with the power supply device includes an electric motor 93 and an engine 96 that drive the vehicle HV, a power supply device 100B that supplies electric power to the electric motor 93, and an electric generator 94 that charges batteries of the power supply device 100B. The power supply device 100B is connected to the electric motor 93 and the electric generator 94 via a DC/AC inverter 95. The vehicle HV is driven both by the electric motor 93 and the engine 96 with the batteries of the power supply device 100B being charged/discharged. The electric motor 93 is energized and drives the vehicle in a poor engine efficiency range, e.g., in acceleration or in a low speed range. The electric motor 93 is energized by electric power is supplied from the power supply device 100B. The electric generator 94 is driven by the engine 96 or by regenerative braking when users brake the vehicle so that the batteries of the power supply device 100B are charged.

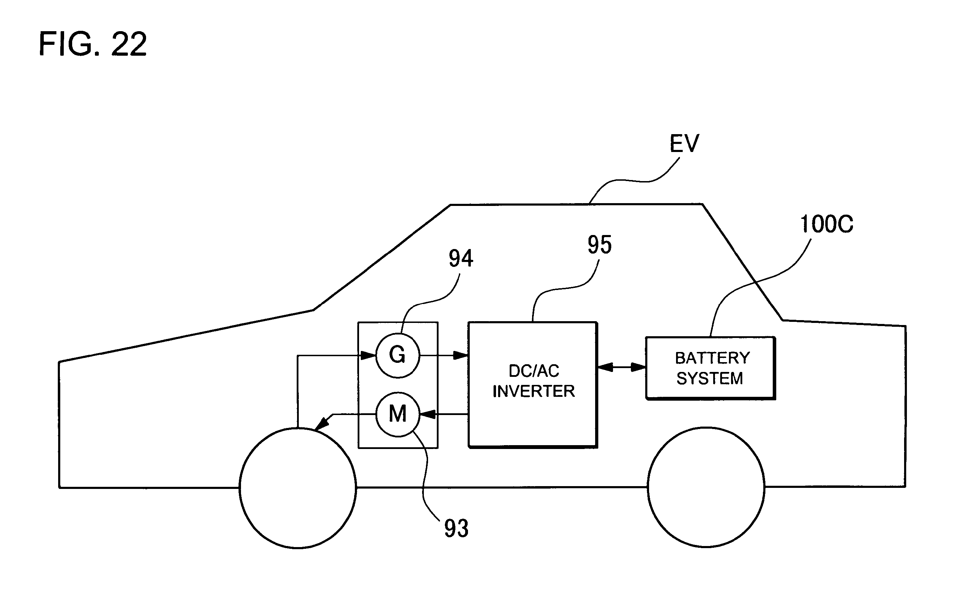

Fig. 22 shows an exemplary electric vehicle that is driven only by an electric motor, and includes the power supply device. The illustrated vehicle EV with the power supply device includes an electric motor 93 that drives the vehicle EV, a power supply device 100C that supplies electric power to the electric motor 93, and an electric generator 94 that charges batteries of the power supply device 100C The electric motor 93 is energized by electric power that is supplied from the power supply device 100C. The electric generator 94 can be driven by vehicle EV regenerative braking so that the batteries of the power supply device 100C are charged.

### Industrial Applicability

A vehicle power supply device and a method for producing a vehicle power supply device according to the present invention can be suitably used as a power supply device for plug-in hybrid vehicles and hybrid electric vehicles that can switch between the EV drive mode and the HEV drive mode, electric vehicles, and the like.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.
100, 100B, 100C ... Power supply device
1 ... Battery cell; 1A ... Rectangular battery cell
2 ... Battery block
3 ... Battery holder
4 ... End plate
5 ... Coupling member
10 ... Outer peripheral surface
11 ... Gas relief valve
12 ... Gas relief port
13 ... Electrode terminal
14 ... Side-by-side arrangement gap
15 ... Separator; 15A ... Groove; 15B ... Protruding portion; 15C ... Partitioning rib
16 ... Cooling gap
17 ... Cover portion; 17A ... Opening/closing cover part 17A
18 ... Coupling plate; 18A ... Protruding portion; 18B, 18B' ... Connection recessed portion
20 ... Exhaust duct
21 ... Elastically-biasing member
22 ... Packing member; 22A ... Through hole; 22B ... Boundary closing portion;
22C ... Fit-in groove
23 ... Connection duct
24 ... Concave holder portion
25 ... Protruding rim part
26 ... Guide portion
27 ... Protruding portion
28 ... Connection arm
29, 29B ... Connection protruding portion
30 ... Exterior case
31 ... Bottom case; 31 A ... Side wall portion; 31 a ... Bent portion; 31 B ... Protruding rib parts
32 ... Top case; 32A ... Side wall portion; 32a ... Bent portion
33 ... Air duct; 33A ... Center air duct; 33B ... Side part air duct
40 ... Interlocking portion
41 ... Interlocking vertical leg
42 ... Interlocking hook part
43 ... Snap-in inclined surface
44 ... Snap-in upper surface
45 ... Interlock reception portion
46 ... Interlock reception vertical wall
47 ... Interlock reception hook part
48 ... Snap-in reception inclined surface
49 ... Snap-in lower surface
93 ... Electric motor
94 ... Electric generator
95 ... DC/AC inverter
96 ... Engine
191 ... Rectangular battery cell
192 ... Battery block
193 ... Exterior case
194 ... Exhaust duct
195 ... Gas relief port
EV, HV ... Vehicle
21
96: Engine
95: DC/AC Inverter
100B: Battery System
22
95: DC/AC Inverter
100C: Battery System

## Claims

1. A vehicle power supply device comprising:
a battery block (2) including a plurality of rectangular battery cells (1A) that are arranged side by side and have gas relief ports (12) of gas relief valves (11), the gas relief ports (12) of the rectangular battery cells being aligned in substantially the same plane;
a hollow exhaust duct (20) that are arranged extending along the gas relief ports (12) of the rectangular battery cells (1A) in said battery block (2), and exhausts gas relieved from the gas relief ports (12) to the outside;
an exterior case (30) that accommodates the battery block (2) with said exhaust duct (2) arranged on the battery block (2), **characterized in that**
said exhaust duct (20) includes interlocking portions (40) that protrude downward, wherein
said battery block (2) includes interlock reception portions (45) that interlock with said interlocking portions (40), the interlock reception portions (45) being arranged at positions corresponding to said interlocking portions (40).

2. The vehicle power supply device according to claim 1, wherein said exterior case is composed of an upper case (32) and a lower case (31), wherein the battery block (2) is secured to the lower case (31).

3. The vehicle power supply device according to claim 1 or 2, wherein
each of said interlocking portions (40) includes
an interlocking vertical leg (41) that extends downward, and
an interlocking hook part (42) that extends from the ends of said interlocking vertical leg (41) at an acute angle, wherein
each of said interlocking hook parts (42) has
a snap-in inclined surface (43) that tapers down toward the end of said interlocking vertical leg (41), and
a snap-in upper surface (44) that extends outward of the side surface of said interlocking vertical leg (41) and is inclined upward relative to the horizontal plane, wherein
each of said interlock reception portions (45) includes
an interlock reception vertical wall (46) that stands upward, and
an interlock reception hook part (47) that extends from the end of said interlock reception vertical wall (46) at an acute angle, wherein
said interlock reception hook part (47) includes
a snap-in reception inclined surface (48) that tapers down toward the end of said interlock reception vertical wall (46), and
a snap-in lower surface (49) that extends outward of the side surface of said interlock reception vertical wall (46) and is inclined downward relative to the horizontal plane, wherein
said interlocking portion (40) interlocks with the interlock reception portion (45) by bringing said snap-in upper surface (44) in contact with the snap-in lower surface (49).

4. The vehicle power supply device according to any of claims 1 to 3, wherein said exhaust duct (20) further includes a pair of guide portions (26) that protrude from a side surface of said exhaust duct (20), wherein said battery block (2) includes a protruding portion (27) that protrude upward to be sandwiched and held between said pair of guide portions (26), wherein said exhaust duct (20) further includes a connection protruding portion (29) that protrudes from the lower part of said exhaust duct (20), wherein said battery block (2) includes a connection recessed portion (18B) that receives said connection protruding portion (29), wherein the protrusion direction of said pair of guide portions (26) is substantially orthogonal to the interior wall of said connection recessed portion (18B).

5. The vehicle power supply device according to claim 4, wherein said pair of guide portions (26), and said interlocking portion (40) are arranged on different side surfaces of said exhaust duct (20).

6. The vehicle power supply device according to claim 4 or 5, wherein said battery block (2) further includes electrically-insulating separators (15) that are interposed between said rectangular battery cells (1A), wherein said rectangular battery cells (1A) and the separators (15) are alternately arranged side by side in said battery block (2), wherein
said protruding portion (27) is formed in said separator (15).

7. The vehicle power supply device according to any of claims 4 to 6, wherein an electrically-insulating connection plate is arranged between a plurality of said battery blocks (2), wherein said connection recessed portion (18B) is formed in said connection plate.

8. The vehicle power supply device according to any of claims 4 to 7, wherein said connection protruding portion is formed in a rod shape, wherein said connection recessed portion (18B) is formed in a hole shape that can receive said rod-shaped connection protruding portion.

9. A method for producing a vehicle power supply device comprising the steps of:
assembling a battery block (2) by arranging a plurality of rectangular battery cells (1A) side by side with electrically-insulating separators (15) being interposed between the rectangular battery cells (1A), the rectangular battery cells (1A) having gas relief ports (12) that can relieve internal gas through gas relief valves (11) and are aligned in substantially the same plane;
placing said battery block (2) in a lower case (31) that opens upward;
airtightly connecting a hollow exhaust duct (20) that can exhaust gas relieved from said gas relief port (12) to said battery block (2); and
closing the opening of said lower case (31) with an upper case (32),
wherein
said airtightly connecting a hollow exhaust duct (20) includes
sandwiching a protruding portion (27) that protrudes upward form said separator (15) between a pair of guide portions (26) that are arranged on a side surface of said exhaust duct (20), and
inserting a connection protruding portion (29) that protrudes from the lower part of said exhaust duct (20) into a connection recessed portion (18B) that is formed in the said battery block (2) and extends in a direction substantially orthogonal to the protrusion direction of said pair of guide portions (26).
